# EUROPEAN PATENT SPECIFICATION

(11) **EP 3 988 683 B1**
(45) Date of publication and mention of the grant of the patent: **24.04.2024**
(21) Application number: 20827081.9
(22) Date of filing: 09.04.2020
(51) Int. Cl.: B22D 11/16, B22D 11/18, C21C 7/06, C22C 38/04, C22C 38/54, C21D 8/02, C22C 38/00, C22C 38/02, C22C 38/44, C22C 38/46, C22C 38/48, C21D 1/18, C22C 1/02, C21D 1/25, C21D 1/84, C21D 9/46, C21C 7/00

(54) **LARGE-THICKNESS LAMELLAR TEARING-RESISTANT HIGH-STRENGTH STEEL PLATE WITH 960 MPA-LEVEL YIELD STRENGTH, AND PRODUCTION METHOD THEREFOR**
HOCHDICKE TERRASSENBRUCHBESTÄNDIGE HOCHFESTE STAHLPLATTE MIT EINER STRECKGRENZE VON 960 MPA UND VERFAHREN ZU IHRER HERSTELLUNG
TÔLE D'ACIER D'ÉPAISSEUR IMPORTANTE À HAUTE RÉSISTANCE MÉCANIQUE ET RÉSISTANTE À LA DÉCHIRURE LAMELLAIRE, PRÉSENTANT UNE LIMITE D'ÉLASTICITÉ DE 960 MPA, ET SON PROCÉDÉ DE PRODUCTION

(30) Priority: 20.06.2019 CN 201910537633
(43) Date of publication of application: 27.04.2022
(73) Proprietor: Jiangyin Xingcheng Special Steel Works Co., Ltd, Jiangyin, Jiangsu 214434 (CN)
(72) Inventor: LIU, Jun, Jiangyin, Jiangsu 214434 (CN); LI, Guozhong, Jiangyin, Jiangsu 214434 (CN); HAN, Buqiang, Jiangyin, Jiangsu 214434 (CN); XU, Xiaohong, Jiangyin, Jiangsu 214434 (CN); ZHU, Tongchun, Jiangyin, Jiangsu 214434 (CN); NING, Kangkang, Jiangyin, Jiangsu 214434 (CN); HAN, Quanjun, Jiangyin, Jiangsu 214434 (CN)
(74) Representative: Huang, Liwei
(86) International application number: PCT/CN2020/083999
(87) International publication number: WO 2020/253335

(56) References cited:
- EP-A1- 2 980 255
- EP-A1- 3 235 923
- EP-A1- 3 246 426
- EP-A1- 3 409 803
- EP-A1- 3 415 656
- EP-A1- 3 467 136
- CN-A- 102 605 252
- CN-A- 104 513 936
- CN-A- 104 831 185
- CN-A- 104 831 185
- CN-A- 105 779 899
- CN-A- 106 498 296
- CN-A- 110 318 008
- JP-A- H07 166 236
- JP-A- 2012 077 336
- JP-A- 2015 004 081
- JP-A- 2016 183 414

## Description

### Technical field

The invention belongs to the field of iron and steel metallurgy, in particular to a method of producing a large-thickness high-strength steel plate with a lamellar tear resistance with 960MPa-level yield strength.

### Background art

High strength steel plates with yield strength of 960MPa and above are mainly used in key stress parts of engineering machinery such as crane boom, crawler crane pull plate and concrete pump truck. They have high requirements for steel plate strength and toughness, surface quality and flatness. At present, the consumption is mainly thin steel plates of 50mm and below. The limit specification of 960MPa high strength steel in European standard EN10025-6 and national standard GB / T 16270 is also 50mm. With the gradual development of large-scale construction machinery and equipment at home and abroad, the demand for high-strength steel plates in large thickness (≥ 50mm) with yield strength of 960MPa and above is also increasing.

As the thickness increases to more than 50mm,it is bound to bring the following problems: (1) limited by the quenching capacity of the quenching machine, there is a large gap between the mechanical properties of the surface and the core of the steel plate, the performance of the steel plate in the thickness direction (z direction) deteriorates, and it is easy to produce lamellar tear when stressed; (2) it is difficult to ensure the low-temperature impact toughness of large thickness steel plate; (3) In order to ensure the hardenability of steel plate, the alloy content must increase, resulting in the decline of welding performance. How to solve the above problems and produce high-strength steel plates with yield strength of 960MPa and above is an urgent problem to be solved in this field.

Chinese patent CN104328350A adopts low C and high Mn composition system, controlled rolling, controlled cooling and quenching & tempering heat treatment process system to produce a high-strength steel plate with yield strength of 960MPa. The steel plate has low quenching temperature (850-880°C) and carbon equivalent CEV ≤ 0.61; it is only applicable to 4-25mm thin steel plate. Chinese patent CN102691010B introduces a HT960 steel plate with excellent plastic toughness and its production method. The steel plate is designed with low C and ultra-low Si composition and produced by on-line TMCP + tempering process. The steel plate has good strength and toughness, and the welding cold crack sensitivity is reduced, but the on-line TMCP process is bound to cause the difference in the properties of the head, middle and tail of the steel plate. The uneven performance of the whole plate has a great impact on the fatigue service life and safety of key stressed parts such as crane boom. Chinese patent CN100494451C uses online DQ + tempering process to produce ultra-high strength steel plate above 960MPa. It also faces the problem of whole plate uniformity, and its application will be limited to a certain extent. Chinese patent CN101397640A uses 50kg vacuum induction furnace to produce 960MPa welded structural steel with rolling thickness of 10mm. Chinese patent CN102286687A uses Steckel mill to produce Q960 high strength steel plate, Ceq ≤ 0.60 and thickness ≤ 12mm.

To sum up, the existing production technologies of 960MPa grade ultra-high strength steel plate mainly include quenching + tempering or online DQ (or TMCP) + tempering; the thickness specifications are concentrated within 50mm specified in national standard GB / T 16270 or European standard EN10025-6, and most of them are ≤ 25mm. These technologies mainly focus on the strength toughness matching of steel plate and the solution of welding performance problems, and do not involve the manufacturing technology of large thickness steel plate ≥ 50mm and the control technology of Z-direction performance of steel plate thickness brought by large thickness.

CN 106498296A produces a steel plate with a yield strength of 1100MPa, wherein the formed structure is bainite with distributed MA components.

EP 3467136A1 produces a steel with a yield strength of ≥1000MPa, wherein the obtained structure is a tempered sorbite structure.

### Detailed description of the invention

The invention is set out in the appended set of claims.

The present invention produces a large-thickness high-strength steel plate with lamellar tear resistance with 960MP-level yield strength, consisting of following constituents by weight percentage: C: 0.15 - 0.20%, Si: 0.10 - 0.40%, Mn: 0.90 - 1.30%, Nb: 0.010 - 0.040%, V: 0.010 - 0.045%, Ti: ≤ 0.010%, Al: 0.03 - 0.06%, Ni: 0.50 - 1.00%, Cu: ≤ 0.1%, Cr: 0.30 - 0.80%, Mo: 0.20 - 0.70%, B: 0.001 - 0.005%, Ca: 0.001 - 0.005%, P: ≤ 0.010%, S: ≤ 0.002%, O: ≤ 0.002%, N: ≤ 0.004%, H: ≤ 0.00015%, the balance is Fe and inevitable impurity elements; Carbon Equivalent Value CEV: 0.58 - 0.68%.

The thickness of the quenched ultra-high strength steel plate is 50 - 100mm.

The reasons for defining the steel composition in the invention are described as follows:
C: Carbon as a solid solution element can significantly improve the strength of steel plate, but it has adverse effects on the toughness, plasticity, cold formability and weldability of steel plate. Based on the strength toughness matching and weldability requirements of the steel plate, the carbon content in the invention is controlled to 0.15 - 0.20%.

Si: plays a solid solution strengthening role in the steel. However, too high Si content will deteriorate the toughness of martensitic high-strength steel and increase the cold crack sensitivity of steel plate. In the invention, it is controlled between 0.10 - 0.40%.

Mn: improve hardenability, promote martensitic transformation and improve strength in the steel. However, Mn is the main segregation element. Too high content will cause the center segregation of continuous casting slab to form MnS, which will have an adverse impact on the toughness, lamellar tear resistance and welding performance of steel plate. The steel plate of the invention has a large thickness, has high requirements for the performance in the Z direction of the thickness, and the specified addition amount of manganese content is in the range of 0.90 - 1.30%.

Nb: the solute drag of Nb and the pinning effect of nano-sized precipitate Nb (C, N) on austenite grain boundary inhibit the growth of austenite grain during heating. When the addition amount is less than 0.010%, the effect is not obvious, and when it is more than 0.040%, the toughness decreases, resulting in surface cracks of continuous casting slab. Therefore, the invention stipulates that the niobium content should be in the range of 0.010 - 0.040%.

V: On the one hand, VN and V (C, N) hinder the growth of austenite grain and refine the grain during heating; On the other hand, these nano-sized fine precipitates can significantly improve the strength of the steel plate. When the addition is less than 0.01%, the precipitation strengthening is not obvious; When the addition is more than 0.050%, the amount of precipitates is more and the toughness is reduced, which has an adverse effect on the z-direction properties of the steel plate. Therefore, the invention stipulates that the niobium content should be in the range of 0.010 - 0.045%.

Ti: The dissolution temperature of TiN and Ti (C, N) is high, usually above 1400°C. At high temperature, it has a strong pinning effect on the grain boundary and prevents the coarsening of austenite grains during heating. However, TiN usually precipitates in the liquid phase, the size is relatively coarse, it is easy to reach the micron level, and the precipitates are hard, mostly with sharp edges, which is not easy to deform, resulting in micro-cracks in the rolling process of the steel plate, which is unfavorable to the low-temperature impact performance and lamellar tear resistance of the steel plate; Therefore, Ti is not allowed to be added in the invention, and the Ti content is clearly controlled to be ≤ 0.010%.

Al: on the one hand, it is added to the steel as a deoxidizing element, on the other hand, Al is combined with N to form AlN, which replaces TiN to fix N and protect B and refine the grain. However, too high Al content will lead to the formation of too many Al₂O₃ inclusions, which makes the ultrasonic detection of the steel plate unqualified and affects the lamellar tear resistance of the steel plate. Therefore, the invention stipulates that the Al content is 0.03 - 0.06%.

Ni: it is an element to improve the hardenability of steel and the most commonly used element to effectively improve the low temperature toughness of steel. The invention adds 0.50 - 1.00% Ni, which can not only improve the strength and toughness of the base metal of the steel plate, but also greatly improve the low-temperature impact toughness of the welded joint.

Cr: it is an element to improve the hardenability of steel, which can inhibit the formation of polygonal ferrite and pearlite, promote the transformation of bainite or martensite in low temperature structure and improve the strength of steel. However, too high Cr content will affect the toughness of the steel and reduce the weldability of the steel plate. In order to ensure the strength of large thickness steel plate, the chromium content in the invention is controlled at 0.30 - 0.80%.

Mo: it is an element to improve the hardenability of steel and is favorable to the formation of full martensite during quenching. Adding a certain content of Mo to the steel plate will improve the strength of the steel plate without affecting the low-temperature impact properties of the steel plate. Mo will form carbide particles with C at high temperature, which can resist the softening of welded joints. However, too high Mo content will increase carbon equivalent and deteriorate welding performance. The content of Mo in the invention is controlled at 0.20 - 0.70%.

B: The invention adds 0.001 - 0.005% Trace B, and its main purpose is to improve the hardenability of the steel plate, so as to reduce the addition of other precious metals and reduce the cost. More than 0.005% B is easy to produce segregation and form boride, which seriously worsens the toughness of the steel plate and reduces the hardenability.

Ca: the invention requires micro-Ca treatment. 0.001- 0.005% Ca can not only reduce the damage of lamellar tear of large thickness steel plate caused by sulfide, but also change Al₂O₃ inclusions produced by Al deoxidation into spherical low melting point inclusions, so as to reduce the generation of micro-cracks at the sharp edges of hard inclusions during steel plate rolling and improve the impact toughness and thickness direction performance in the aspect of uniformity.

P, S: sulfur and phosphorus are harmful elements of steel grade, which are easy to segregate and adversely affect the plastic toughness of the material, especially the z-direction performance of the steel plate. The content of P and S is high, which is easy to cause lamellar cracking in the thickness direction of the steel plate. The invention stipulates that P: ≤ 0.010%, s: ≤ 0.002%.

O. N: harmful gas elements, high content and many inclusions, which reduce the plasticity, toughness and Z-direction properties of the steel plate. The invention strictly controls the O content not higher than 0.002%; N content is not higher than 0.004%.

H: Harmful gas elements. High H content, easy to produce white spots, reduce the plastic toughness of the steel plate, and seriously endanger the service performance of the steel plate. H delayed crack is one of the main causes of lamellar tear failure of large thickness high strength steel. In order to improve the lamellar tear resistance of the steel plate, the H content is strictly controlled within 0.00015%.

CEV: the invention adopts the carbon equivalent formula CEV = C + Mn/6 + (Cr + Mo + V)/5 + (Ni + Cu)/15; Carbon equivalent has a great influence on the strength and weldability of steel. CEV has high strength, but the weldability is reduced; The invention controls 0.58 ≤ CEV ≤ 0.68.

The invention provides the preparation method of the large thickness ultra-high strength steel plate with excellent strength and toughness and good lamellar tear resistance, and the yield strength is greater than or equal to 960MPa. The specific process is as follows,

Smelting process: it is smelted by electric furnace or converter, and then sent to LF refining furnace for refining, and subjected to VD or RH vacuum treatment. After degassing, the molten steel shall be treated with trace Ca to control the Ca content of 0.001 - 0.005%. After treatment, the molten steel shall be soft stirred for no less than 10 minutes to ensure complete modification and full floating removal of steel sulfide and oxide.

Continuous casting process: in order to improve the internal quality of the final steel plate, improve the lamellar tear resistance and flaw detection qualification rate of the steel plate, the thickness of the continuous casting slab is controlled to be 3 times or more of the target thickness of the steel plate; In order to control the center porosity and segregation of steel plate, low overheat pouring, whole process argon protection pouring and dynamic soft reduction control are carried out. The overheat of molten steel shall be controlled at 5 - 20°C, and when the center segregation and the center porosity of the continuous casting slab are determined according to Standard YB/T 4003-2016, the center segregation shall not be higher than C1.0, the center porosity shall not be higher than grade 1.0, to avoid lamellar tearing caused by central defects.

Heating and rolling process: put the slab into the walking beam furnace and heat it to 1150-1250°C for 8-14min / cm, so that the alloy elements in the steel can be fully dissolved to ensure the uniformity of composition and performance of the final product. After the slab is discharged from the furnace and descaled by high-pressure water, it is subject to two-stage control rolling: rough rolling and finish rolling. The starting temperature of rough rolling is 1050-1100°C. In order to improve the lamellar tear resistance of the steel plate, it is necessary to ensure that the rolling deformation penetrates into the center of the steel plate. Because the deformation resistance of the steel plate is low at high temperature, it is easy to deform. The invention requires to ensure that the total reduction rate in the high temperature stage (≥ 960°C) of rough rolling is ≥ 55%; the reduction rate in the last two passes of rough rolling is ≥ 15%; In order to further increase the deformation of the steel plate core and obtain fine original austenite grains, the start rolling temperature of finish rolling is controlled at 800 - 850°C and the final rolling is controlled at a lower temperature of 780 - 830°C.

Slow cooling treatment of steel plate: after the steel plate is rolled, it will not be cooled, it will quickly go off the line and enter the thermal insulation cover. The temperature of entering the cover is ≥ 350°C, and the cooling time of the cover is ≥ 24 hours. Slow cooling treatment with residual temperature of rolled steel plate can promote the uniformity of microstructure and properties in the center of steel plate, reduce the gas content in the center, and greatly improve the lamellar tear resistance in the thickness direction of steel plate.

Heat treatment process: quench the rolled steel plate at 900 - 940°C after rolling, and the holding duration is 30 - 90min after the furnace temperature reaches the temperature. In order to ensure the uniformity of the steel plate, the temperature control accuracy is ± 10°C. The tempering temperature of steel plate is 560 - 620°C, and the holding duration is 50 - 120min after the furnace temperature reaches the temperature.

Compared with the existing technologies, the invention has the advantages of:
In the invention, the common element Al is used to replace the alloy element Ti for fixing N and protecting B treatment, which reduces the influence of the precipitate of Ti on the impact and thickness Z-direction properties, and reduces the alloy cost at the same time; Trace Ca treatment is required after degassing of molten steel to promote the modification and floating of inclusions and improve the thickness direction performance of steel plate; The invention controls 0.58 ≤ CEV ≤ 0.68 to ensure the strength of large thickness steel plate and improve the welding performance of steel plate.

The invention requires that the thickness of continuous casting slab is controlled to be 3 times or more of the thickness of target steel plate; In order to control the center porosity and segregation of steel plate, low overheat pouring, whole process argon protection pouring and dynamic soft reduction control are carried out. The overheat of molten steel shall be controlled at 5 - 20°C, and the center segregation shall not be higher than C1.0, and the center porosity shall not be higher than grade 1.0.

The invention adopts two-stage controlled rolling to ensure that the total reduction rate in the high temperature stage (≥ 960°C) of rough rolling is ≥ 55%; the reduction rate in the last two passes of rough rolling is ≥ 15%; In order to further increase the core deformation of steel plate, the start rolling temperature of finish rolling is controlled at 800 - 850°C and the final rolling is controlled at a lower temperature of 780 - 830°C, so as to ensure that fine original austenite grains can be obtained from the surface to the center during off-line quenching of steel plate.

The steel plate of the invention does not need controlled cooling after rolling, and requires rapid off-line and slow cooling treatment. The residual temperature of rolled large thickness steel plate is used to promote the uniformity of micro-structure and properties in the center of the plate, reduce the gas content in the center, and greatly improve the lamellar tear resistance in the thickness direction of the steel plate. The steel plate entering the cover temperature ≥ 350°C, and the cover cooling time ≥ 24 hours.

The maximum thickness of the steel plate can reach 100mm; Steel plate yield strength ≥ 960MPa, tensile strength ≥ 1000MPa, elongation ≥ 12%; -40°C low temperature impact toughness Akv ≥ 30J; the section shrinkage when stretched along Z direction is is ≥ 35%, and the lamellar tear resistance is good.

The method of the invention can be extended to other high-strength steel plates, such as high-strength marine ship plate steel, and steel for high-rise building, bridge, construction machinery, pressure vessel, etc.

### Description of the Attached Drawings

Fig. 1 is a typical SEM scanning picture (2000X) of the test steel in embodiment 1 of the present invention.
Fig. 2 is a typical SEM scanning picture (2000X) of the test steel in embodiment 2 of the present invention.

### Detailed description of embodiments

The invention is described in further detail below in combination with the embodiment of the accompanying drawings.

The production process of the ultra-high strength steel of the invention is: steel making in converter or electric furnace - > LF refining - > VD or RH vacuum degassing - > Ca treatment - > continuous casting - > heating - > rolling - > slow cooling of steel plate - > quenching - > tempering

The production method of large thickness high-strength steel plate with lamellar tear resistance with 960MPa-level yield strength according to embodiment 1-2 of the invention comprises the following steps:
(1) Smelting: 150-ton converter is used for smelting, and then sent to LF furnace for refining, RH vacuum degassing treatment, Ca treatment through air breaking, control the Ca content of 0.001 - 0.005%, and soft mixing is carried out for molten steel after treatment. The mixing time is not less than 10 minutes to ensure complete modification and full floating removal of steel sulfide and oxide. See Table 1 for composition control of molten steel.
(2) Continuous casting: casting molten steel into 370 or 450mm thick continuous casting slab. The casting temperature shall be controlled at 5-20°C above the liquidus. Dynamic soft reduction is implemented during casting. The center segregation is not higher than C1.0, the center porosity shall not be higher than grade 1.0, so as to avoid lamellar tearing in the thickness direction caused by sulfide segregation and core holes. See Table 2 for relevant process parameters.
(3) Rolling: put the continuous casting slab obtained in step (2) into the walking beam heating furnace, heat it to 1150 - 1250°C, and the heating duration is 8 - 14min / cm, so that the alloy elements in the steel can be fully dissolved, so as to ensure the uniformity of composition and performance of the final product. After the slab is discharged from the furnace and descaled by high-pressure water, it is subject to two-stage controlled rolling: rough rolling and finish rolling. The starting temperature of rough rolling is 1050-1100°C. Ahigh-temperature rolling with a large deformation is adopted, and the deformation above 960°C is ≥ 55%; Reduction rate of the last 2 passes of the rough rolling ≥ 15%. In order to further increase the core deformation of the steel plate and obtain fine original austenite grains, the start rolling temperature of finish rolling is controlled at 800 - 850°C and the final rolling temperature is controlled at a lower temperature of 780 - 830°C. After rolling, the steel plate shall be removed off the line quickly and cooled slowly in the cover. The temperature in the cover shall be ≥ 350°C and the cooling time in the cover shall be ≥ 24 hours. See Table 3 for relevant process parameters.
(5) Quenching and tempering: the quenching temperature of steel plate is 900 - 940°C, the holding duration is 30 - 90min, and the quenching medium is water. After quenching, the steel plate enters the continuous furnace for tempering. The tempering temperature of steel plate is 560 - 620°C, and the holding duration is 50 - 120min. See Table 4 for heat treatment process.

See Table 1 - Table 4 for specific composition and process parameters. See Table 5 for the corresponding performance of each embodiment.

**Table 1 chemical composition of super strong steel plate in embodiment (wt%)**

| Embodiment | C | Si | Mn | P | S | Cr | Mo | Nb | V | Ni | Al | B | Ca | O | N | H | CEV |
|---|---|---|---|---|---|---|---|---|---|---|---|---|---|---|---|---|---|
| 1 | 0.16 | 0.25 | 1.10 | 0.010 | 0.002 | 0.40 | 0.60 | 0.02 | 0.045 | 0.50 | 0.050 | 0.0015 | 0.0015 | 0.0012 | 0.0030 | 0.0001 | 0.59 |
| 2 | 0.19 | 0.3 | 1.20 | 0.009 | 0.001 | 0.80 | 0.30 | 0.02 | 0.040 | 0.90 | 0.055 | 0.0020 | 0.0020 | 0.0010 | 0.0025 | 0.0001 | 0.68 |

**Table 2 continuous casting process control**

| Embodiment | slab thickness, mm | Overheat, °C | center segregation | Center porosity |
|---|---|---|---|---|
| 1 | 370 | 20 | C1.0 | 0.5 |
| 2 | 450 | 15 | C0.5 | 0.5 |

**Table 3 rolling process control**

| Embod iment | Product thickness specificati on, mm | Reduction rate (≥ 960°C) | Reduction rate of the last 2 passes of rough rolling | Start temperatur e of finish rolling, °C | Final rolling temperat ure, °C | Start temperatur e of slow cooling, °C | Slow cooling time, hour |
|---|---|---|---|---|---|---|---|
| 1 | 60 | 61% | 23%+25% | 835 | 780 | 450 | 24 |
| 2 | 100 | 60% | 15%+18% | 830 | 790 | 450 | 48 |

**Table 4 heat treatment process control**

| Embod iment | Product thickness specification, mm | Quenching temperature, °C | Quenching holding duration, mm | Tempering temperature, °C | Tempering holding duration, min |
|---|---|---|---|---|---|
| 1 | 60 | 910 | 35 | 600 | 70 |
| 2 | 100 | 910 | 80 | 570 | 120 |

**Table 5 tensile, impact and Z-direction properties of embodiment in the invention**

| Embodiment | Thickness mm | Transverse tension | | | Z direction % | Impact energy AKv, J | | | |
|---|---|---|---|---|---|---|---|---|---|
| | | Yield strength Pa | Tensile strength Mpa | Elongation% | | | | | |
| 1 | 60 | 1025 | 1088 | 15.5 | 49 | -40°C | 61 | 58 | 66 |
| 2 | 100 | 1013 | 1069 | 16 | 45 | -40°C | 54 | 45 | 58 |

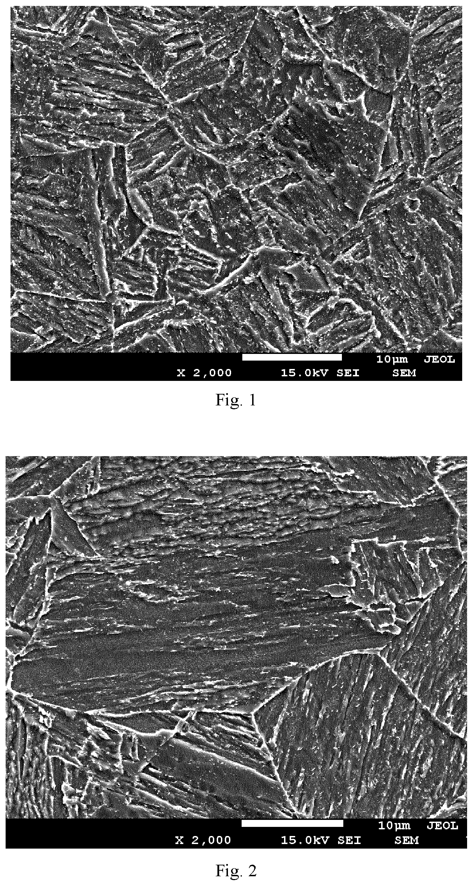

Figures 1 and 2 show the micro-structure photos of the test steel in embodiment 1 and 2. The micro-structure of the finished steel plate is uniform tempered sorbite structure, with fine grains, the shrinkage of the thickness direction (Z-direction section) meets Z35, reaching more than 40%, and good lamellar tear resistance. It can be seen that the original austenite grains of 960MPa high strength steel plate with a large thickness of ≥ 50mm can be effectively refined through large deformation in high temperature stage and reducing the start and finish rolling temperature of finish rolling, and the average size can be ≤ 30um, so as to ensure the fine martensite structure after quenching, and fully ensure the lamellar tear resistance of the steel plate while meeting the strength and toughness of the steel plate.

The invention adopts high cleanliness steel-making and continuous casting process, controls rolling, slow cooling of steel plate, off-line quenching + tempering process, and controls from the aspects of chemical composition design, base metal structure, inclusions, center segregation, center porosity, rolling deformation, slow cooling of steel plate, quenching and tempering temperature and time, so as to ensure that the steel plate has strength, excellent elongation and -40°C low-temperature impact toughness. At the same time, the steel plate has good lamellar tear resistance, which provides feasibility for further large-scale engineering equipment, and has the advantages and prospects of mass production and application.

## Claims

1. A method of producing a large-thickness high-strength steel plate with lamellar tear resistance with 960MP-level yield strength, wherein the steel plate consists of following constituents by weight percentage: C: 0.15 - 0.20%, Si: 0.10 - 0.40%, Mn: 0.90 - 1.30%, Nb: 0.010 - 0.040%, V: 0.010 - 0.045%, Ti: ≤ 0.010%, Al: 0.03 - 0.06%, Ni: 0.50 - 1.00%, Cu: ≤ 0.1%, Cr: 0.30 - 0.80%, Mo: 0.20 - 0.70%, B: 0.001 - 0.005%, Ca: 0.001 - 0.005%, P: ≤ 0.010%, S: ≤ 0.002%, O: ≤ 0.002%, N: ≤ 0.004%, H: ≤ 0.00015%, the balance is Fe and inevitable impurity elements; Carbon Equivalent Value CEV: 0.58 - 0.68%, wherein the CEV is calculated from a carbon equivalent formula CEV = C + Mn/6 + (Cr + Mo + V)/5 + (Ni + Cu)/15;
the method comprises following steps:
(1) smelting
corresponding chemical components are smelted by electric furnace or converter, out-of-furnace refining and vacuum treatment are used to perform fine tuning;
(2) Ca Treatment
the molten steel is fed with Ca after vacuum treatment, wherein an added amount of Ca is controlled to be within 0.001 - 0.005%; after treatment, the molten steel is softly stirred for no less than 10 minutes;
(3) continuous casting
the molten steel is poured with low overheat, under argon protection in the whole process and under dynamic soft reduction control, the overheat of molten steel is controlled at 5 - 20°C, so as to obtain a continuous casting slab, wherein the continuous casting slab has center segregation of no higher than C1.0, center porosity of no higher than grade 1.0, when the center segregation and the center porosity are determined according to Standard YB/T 4003-2016; and the thickness of the continuous casting slab is controlled to be 3 or more times the thickness of a target steel plate;
(4) heating and rolling
the slab is heated to 1150-1250°C, and the duration of heating is 8-14min / cm; after the slab is removed out of the furnace, performing descaling treatment with high-pressure water, and performing two stages of rolling: rough rolling + finish rolling; wherein a start rolling temperature of the rough rolling is 1050-1 100°C; in a high-temperature stage of the rough rolling, the temperature is kept to be ≥ 960°C and the total reduction rate is ≥ 55%; the reduction rate of the last two passes of the rough rolling is ≥ 15%, a start rolling temperature of finish rolling is controlled at 800-850°C, and the final rolling is controlled at a lower temperature of 780-830°C;
(5) slow cooling treatment of steel plate
after rolling, the steel plate is not cooled, but quickly enters a thermal insulation cover, the temperature of entering the cover is ≥ 350°C and the cooling time under the cover is ≥ 24 hours;
(6) heat treatment for quenching & tempering
after slow cooling, the steel plate is treated with quenching, the quenching temperature is 900 - 940°C, and after the furnace temperature reaches the temperature, the holding duration is 30 - 90min; the tempering temperature for steel plate is 560 - 620°C, and after the furnace temperature reaches the temperature, the holding duration is 50 - 120min .

2. The method of producing the large-thickness high-strength steel plate with lamellar tear resistance with 960MP-level yield strength according to claim 1, wherein the thickness of the high-strength steel plate is 50 - 100mm.

## Patentansprüche

1. Verfahren zum Herstellen einer hochdicken, hochfesten Stahlplatte mit Terrassenbruchbeständigkeit mit einer Streckgrenze von 960-MPa-Niveau , wobei die Stahlplatte nach Gewichtsprozent aus folgenden Bestandteilen besteht: C: 0,15 - 0,20 %, Si: 0,10 - 0,40 %, Mn: 0,90 - 1,30 %, Nb: 0,010 - 0,040 %, V: 0,010 - 0,045 %, Ti: ≤ 0,010 %, Al: 0,03 - 0,06 %, Ni: 0,50 - 1,00 %, Cu: ≤ 0,1 %, Cr: 0,30 - 0,80 %, Mo: 0,20 - 0,70 %, B: 0,001 - 0,005 %, Ca: 0,001 - 0,005 %, P: ≤ 0,010 %, S: ≤ 0,002 %, O: ≤ 0,002 %, N: ≤ 0,004 %, H: ≤ 0,00015 %, wobei der Rest Fe und unvermeidliche Verunreinigungselemente ist; Kohlenstoffäquivalentwert CEV: 0,58 - 0,68 %,wobei der CEV aus einer Kohlenstoffäquivalentformel berechnet wird: CEV = C + Mn/6 + (Cr + Mo + V)/5 + (Ni + Cu)/15;
wobei das Verfahren die folgenden Schritte umfasst:
(1) Verschmelzen
entsprechende chemische Komponenten werden durch einen elektrischen Ofen oder Konverter verschmolzen, Raffinierung außerhalb des Ofens und Vakuumbehandlung werden verwendet, um die Feinabstimmung durchzuführen;
(2) Ca-Behandlung
der geschmolzene Stahl wird nach einer Vakuumbehandlung mit Ca gespeist, wobei die zugesetzte Menge an Ca so gesteuert wird, dass sie innerhalb von 0,001 - 0,005 % liegt; nach der Behandlung wird der geschmolzene Stahl über nicht weniger als 10 Minuten lang sanft gerührt;
(3) Stranggießen
der geschmolzene Stahl wird mit geringer Überhitzung gegossen, während des gesamten Prozesses unter Argonschutz und unter dynamischer Soft-Reduction-Steuerung, die Überhitzung des geschmolzenen Stahls wird auf 5 -20 °C gesteuert, um eine Stranggussbramme zu erhalten, wobei die Stranggussbramme eine Mittenseigerung von nicht mehr als C1,0, eine Mitteporosität von nicht mehr als Grad 1,0 aufweist, wenn die Mittenseigerung und die Mitteporosität gemäß der Norm YB/T 4003-2016 bestimmt werden; und die Dicke der Stranggussbramme wird so gesteuert, dass sie das Dreifache oder mehr der Dicke einer Zielstahlplatte ist;
(4) Erhitzen und Walzen
die Bramme wird auf 1150 - 1250 °C erhitzt und die Erhitzungsdauer beträgt 8 - 14 Minuten/cm; nachdem die Bramme aus dem Ofen entnommen wurde, Durchführen einer Entzunderungsbehandlung mit Hochdruckwasser und Durchführen von zwei Walzstufen: Vorwalzen + Fertigwalzen; wobei eine Startwalztemperatur des Vorwalzens 1050 - 1100 °C beträgt; in einer Hochtemperaturstufe des Vorwalzens die Temperatur auf ≥ 960 °C gehalten wird und die Gesamtreduktionsrate ≥ 55 % ist; die Reduktionsrate der letzten beiden Durchgänge des Vorwalzens ≥ 15 % ist, eine Anfangswalztemperatur des Fertigwalzens bei 800 - 850 °C gesteuert wird und das Fertigwalzen auf eine niedrigere Temperatur von 780 - 830 °C gesteuert wird;
(5) langsame Abkühlbehandlung der Stahlplatte
nach dem Walzen wird die Stahlplatte nicht abgekühlt, sondern gelangt schnell in eine wärmeisolierende Abdeckung, die Eintrittstemperatur in die Abdeckung beträgt ≥ 350 °C und die Abkühlzeit unter der Abdeckung beträgt ≥ 24 Stunden;
(6) Wärmebehandlung zum Härten & Anlassen
nach dem langsamen Abkühlen wird die Stahlplatte mit Härten behandelt, die Härtetemperatur beträgt 900 - 940 °C, und nachdem die Ofentemperatur die Temperatur erreicht, beträgt die Haltedauer 30 - 90 Minuten; die Anlasstemperatur für die Stahlplatte beträgt 560 - 620 °C, und nachdem die Ofentemperatur die Temperatur erreicht, beträgt die Haltedauer 50 - 120 Minuten.

2. Verfahren zum Herstellen der hochdicken, hochfesten Stahlplatte mit Terrassenbruchbeständigkeit mit einer Streckgrenze von 960-MPa-Niveau nach Anspruch 1, wobei die Dicke der hochfesten Stahlplatte 50 - 100 mm beträgt.

## Revendications

1. Procédé de production d'une tôle d'acier d'épaisseur importante à haute résistance mécanique présentant une résistance à la déchirure lamellaire et présentant une limite d'élasticité de niveau 960 MPa, ladite tôle d'acier étant constituée des constituants suivants en pourcentage en poids : C : 0,15 - 0,20 %, Si : 0,10 - 0,40 %, Mn : 0,90 - 1,30 %, Nb : 0,010 - 0,040 %, V : 0,010 - 0,045 %, Ti : < 0,010 %, Al : 0,03 - 0,06 %, Ni : 0,50 - 1,00 %, Cu : ≤ 0,1 %, Cr : 0,30 - 0,80 %, Mo : 0,20 - 0,70 %, B : 0,001 - 0,005 %, Ca : 0,001 - 0,005 %, P : ≤ 0,010 %, S : ≤ 0,002 %, O : ≤ 0,002 %, N : ≤ 0,004 %, H : ≤ 0,00015 %, le reste est composé du Fe et des éléments d'impuretés inévitables ; Valeur d'équivalent carbone CEV : 0,58 - 0,68 %, ladite CEV étant calculée à partir d'une formule d'équivalent carbone CEV = C + Mn/6 + (Cr + Mo + V)/5 + (Ni + Cu)/15 ;
le procédé comprenant les étapes suivantes :
(1) fusion
des composants chimiques correspondants sont fondus au moyen d'un four électrique ou d'un convertisseur, un raffinage hors four et un traitement sous vide sont utilisés pour effectuer un réglage fin ;
(2) Traitement au Ca
l'acier fondu est alimenté en Ca après traitement sous vide, ladite quantité ajoutée de Ca étant régulée pour être dans les limites de 0,001 - 0,005 % ; après traitement, l'acier fondu est doucement agité pendant au moins 10 minutes ;
(3) coulée continue
l'acier fondu est coulé avec une faible surchauffe, sous protection d'argon pendant tout le processus et sous régulation dynamique de réduction douce, la surchauffe de l'acier fondu est régulée à 5 - 20°C, de façon à obtenir une brame de coulée continue, ladite brame de coulée continue possédant une ségrégation centrale qui n'est pas supérieure à C1,0, une porosité centrale qui n'est pas supérieure au grade 1,0, lorsque la ségrégation centrale et la porosité centrale sont déterminées selon la norme YB/T 4003-2016 ; et ladite épaisseur de la brame de coulée continue étant régulée pour être supérieure ou égale à 3 fois, l'épaisseur d'une plaque d'acier cible ;
(4) chauffage et laminage
la brame est chauffée à 1150-1250°C, et la durée de chauffage est de 8 à 14 min/cm ; après que la brame soit retirée du four, la réalisation d'un traitement de détartrage avec de l'eau à haute pression et la réalisation de deux étapes de laminage : laminage grossier + laminage de finition ; une température de laminage de départ du laminage grossier étant de 1050 - 1100°C ; dans une étape à haute température du laminage grossier, ladite température étant maintenue ≥ 960°C et ledit taux de réduction total étant ≥ 55 % ; ledit taux de réduction des deux dernières passes du laminage grossier étant ≥ 15 %, une température de laminage de départ du laminage de finition étant régulée à 800 - 850°C, et ledit laminage final étant régulé à une température inférieure à 780-830°C ;
(5) traitement de refroidissement lent de tôle d'acier
après le laminage, la tôle d'acier n'est pas refroidie, mais pénètre rapidement dans une couverture d'isolation thermique, la température d'entrée dans la couverture est ≥ 350°C et le temps de refroidissement sous la couverture est ≥ 24 heures ;
(6) traitement thermique pour la trempe et le revenu
après un refroidissement lent, la tôle d'acier est traitée par trempe, la température de trempe est 900 - 940°C et après que la température du four atteint la température, la durée de maintien est 30 - 90 minutes ; la température de revenu pour la tôle d'acier est 560 - 620°C, et après que la température du four atteint la température, la durée de maintien est 50 - 120 minutes.

2. Procédé de production de la plaque d'acier d'épaisseur important à haute résistance mécanique présentant une résistance à la déchirure lamellaire et présentant une limite d'élasticité de niveau 960MPa selon la revendication 1, ladite épaisseur de la plaque d'acier à haute résistance mécanique étant 50 - 100 mm.
